# EUROPEAN PATENT SPECIFICATION

(11) **EP 3 668 021 B1**
(45) Date of publication and mention of the grant of the patent: **21.08.2024**
(21) Application number: 18212513.8
(22) Date of filing: 14.12.2018
(51) Int. Cl.: H04L 51/212

(54) **A METHOD OF, AND A DEVICE FOR, RECOGNIZING SIMILARITY OF E-MAIL MESSAGES**
VERFAHREN UND VORRICHTUNG ZUR ERKENNUNG DER ÄHNLICHKEIT VON E-MAIL-NACHRICHTEN
PROCÉDÉ ET DISPOSITIF POUR RECONNAÎTRE LA SIMILARITÉ DE MESSAGES DE COURRIER ÉLECTRONIQUE

(43) Date of publication of application: 17.06.2020
(73) Proprietor: Koninklijke KPN N.V., 3072 AP Rotterdam (NL)
(72) Inventor: Thie, Martijn Ruben Leander, 9761 JT Eelde (NL)
(74) Representative: Wuyts, Koenraad Maria

(56) References cited:
- EP-A1- 1 881 659
- US-A1- 2005 060 643
- US-B1- 8 612 523

## Description

### Technical field

The present disclosure is generally related to filters for recognizing a similarity in received e-mail messages. More specifically, the present disclosure is directed to recognizing spam e-mail messages.

### Background

E-mail spam messages, also known as junk e-mail, may be defined as unsolicited messages that are sent in bulk via e-mail. Basically, spam mail is a form of junk email, which is unwanted by the recipient. It commonly is a single message which contains advertisements and is sent to a variety of recipients who never agreed to receive such messages.

The most common methods spammers use to build up their email lists include: purchasing lists of addresses, tricking users into handing over their information through fake contests and false freebie offers, or using email-harvesting programs to extract addresses from websites.

Often, these e-mail spam messages contain disguised links that appear to be for familiar websites but in fact lead to phishing web sites or sites that are hosting malware. Spam email may also include malware as scripts or other executable file attachments, for example trojans.

Senders of abusive emails, like the above mentioned e-mail spam messages, may deliberately craft email messages that are not exactly the same as a previous one.

Subject, headers and other viewable or hidden portions of the email message are made unique or are obfuscated to make it harder for automated filters to recognize similar messages. The e-mail spam messages may not be a hundred percent identical, thereby making it harder for filters / firewalls to detect whether a message is a spam message.

Comparing all email messages in transfer to a set of stored email messages, for example which were previously marked as abusive, is far too expensive on CPU and memory for larger email systems with large email flows. Further, such a technique is not adequate as the e-mail spam messages may not be identical.

EP 1881659 discloses a method of processing a received image file, comprises receiving the image file; and detecting a match between the received image file and a previously received image file, if (a) the received image file differs from the previously received image file, and (b) an image represented by the received image file is visually identical to an image represented by the previously received image file.

US 8,612,523 discloses a method to detect Botnet attacks by collecting samples of spam messages, forming clusters of related spam messages, and identifying the source or sources of the related spam messages. The related spam messages may be identified as those generated using the same template. For example, spam messages generated using the same image template, text template, or both may be deemed as related. To find related spam messages, images of spam messages may be extracted and compressed using a lossy compression algorithm. The compressed images may then be compared to one another to identify those generated using the same image template. The lossy compression algorithm may involve dividing an image into several blocks and then computing a value for each block for comparison.

### Summary

According to the invention there is provided a method as claimed in claim 1.

The presented method may be directed to the basic concept of looking at an e-mail as a human would. A received e-mail may not be identical to another e-mail that was previously received, but the received e-mail may still be perceived as it is actually the same email as the one that was previously received.

A spammer may construe spam e-mail messages in such a way that none of the spam e-mail messages are identical, but that the look and feel of these messages are actually the same.

It was found to introduce a method which is not directed to a one on one comparison of the content of a particular message, but is directed to a comparison of visual representations of e-mail messages. A visual representation of an e-mail message may be directed to the look and feel of the message, i.e. as perceived by a human.

The presented method may comprise four steps which are described in more detail here below.

In a first step, a particular e-mail message may be received by the e-mail processing device. The e-mail may be in a Hypertext Markup Language, HTML, formatted e-mail or may be a plain text formatted e-mail, or a combination of both. The method may be applicable to both types of e-mail formatting. The e-mail may further contain attachments such as documents or images or other textual or binary files.

In a second step, a visual representation of the received e-mail message may be processed such that it results in a processed visual representation in which visual characteristics of the visual representation are highlighted. The visual aspects of the received e-mail message may be generalized, the visual representation of the received e-mail message may be made more fuzzy or blurry or the like. Detailed examples may include the averaging of colours within the visual representation, the highlighting of explicit, noticeable, colour transitions within the visual representation, or anything alike.

In a third step, from the processed visual representation, a content identification code may be computed, wherein the content identification code may be a measure for how a human would visually perceive said received e-mail message. The content identification code may be a digital string of characters that identifies the processed visual representation. The content identification code may be a hash code, which will be explained in more detail with respect to the figures.

In a fourth step, it may be determined that the received e-mail message is similar to another e-mail message by finding a match between the computed content identification code and a plurality of content identification codes in a database. The database may be comprised by the e-mail processing device, or may be a database external to the e-mail processing device. In any case, the e-mail processing device may have access to the database.

The database may be filled on the job, wherein the computed content identification codes may be inserted into the database each time an e-mail is received. In such a case, the database may be built from scratch. Each computed content identification code may, for example, be stored for a predetermined limited amount of time, for example one to five years, or anything alike to prevent overloading of the database.

A visual representation of the source-code, of the received e-mail message may comprise the following. A viewport may be set to what a typical human viewer would see at first glance when looking at the e-mail message. A typical example is a viewport of 1024 pixels wide and 1024 pixel high. Any other resolution may, of course, also work with the present disclosure. Using such a particular viewport, an image, i.e. a visual representation, may be created of either the source-code of the e-mail.

The source-code may, for example, first be undone of all kinds of encoding, such as Base64 or Quoted-Printable before the image is created. Any content that falls outside the viewport may be discarded, because the typical viewer would also be unable to see that particular content.

Once the image is created, the image may be divided into a grid having a plurality of cells. Within each cell of the grid, the average colour of the pixels may be calculated. Different grid sized may be applied to change the level of detail used in the computing / comparison steps.

The processing of the image may further entail making the image more fuzzy. To do so, the details of the Red, Green and Blue, RGB, values may be removed by discarding the least significant bits. This may result in a list of fuzzy average colours.

Then, a content identification code may be computed using the list of fuzzy average colours as input. A hashing algorithm may be used, which results in a plain hash that may be used to compare to other hashes in the database, and that identifies the form of the source-code rather then the message itself.

Thus, in an example, the step of processing may further comprise:
- dividing said visual representation into a grid having a plurality of cells;
- computing an average colour for each cell of said plurality of cells in said grid;
and wherein said step of computing uses said computed average colour for each cell as input for computing said content identification code.

The size of a cell may, for example, be sixteen times sixteen pixels, eight by eight pixels, or sixty four by sixty four pixels or anything alike.

In a further example, the visual representation of said source-code of said received e-mail message may be processed, and wherein said step of processing said visual representation may further comprise at least one of:
- decoding transfer-encoded parts of said source-code of said received e-mail message with a text content-type to view a textual representation of said source-code of said received e-mail message;
- discarding a header of said received e-mail message;
- wrapping lines of said source-code of said received e-mail message which fall outside said visual representation.

Even more specifically, the step of processing may further comprise:
- discarding whitespace characters in said source-code of said received e-mail message;
- counting the number of non-whitespace characters in said source-code of said received e-mail message.

In another example, the step of processing may further comprise:
- condensing said visual representation of said source-code of said received e-mail message.

In yet a further example, the step of condensing may comprise at least one of:
- grabbing a number of lines together to form a plurality of blocks;
- determining an average number of non-whitespace characters in each of said plurality of blocks.

The above described examples are directed to the concept of making the received e-mail message more fuzzy. The inventors have found that the human perception of a particular e-mail message may be quantified, i.e. realized, by making the received e-mail fuzzy. Implementing such a fuzziness may be accomplished using various techniques, as explained above.

Highlighting the visual characteristics of the visual representation, i.e. making the e-mail message more fuzzy, may be compared with a human squinting, or squeezing, his/her eyes such that the image is a bit blurry. This has the effect that a human will see an image more fuzzy, more generic, more contour sensitive, or anything alike.

According to the invention, the method further comprises the step of:
- classifying said received e-mail as a spam e-mail triggered by said step of determining that said received e-mail message is similar to another e-mail message.

The method as defined in the present disclosure may be applicable for a variety of applications. One of those applications may be to detect spam e-mail at an early stage. A particular e-mail processing device may detect a plurality, a multitude, of the same e-mail messages sent to a plurality of distinct recipients. Such e-mails may then be classified as spam e-mails.

According to the invention there is equally provided an email processing device as claimed in claim 7.

In a further example, the at least one processor may further be configured for any of:
- dividing said visual representation into a grid having a plurality of cells;
- computing an average colour for each cell of said plurality of cells in said grid;
and wherein said computing uses said computed average colour for each cell as input for computing said has hash code.

According to the invention, the at least one processor is arranged for processing said visual representation of said source-code of said received e-mail message, and wherein said at least one processor may further be arranged for processing said visual representation by:
- decoding transfer-encoded parts of said source-code of said received e-mail message with a text content-type to view a textual representation of said source-code of said received e-mail message;
- discarding a header of said received e-mail message;
- wrapping lines of said source-code of said received e-mail message which fall outside said visual representation.

In a further example, the at least one processor may further be arranged for:
- discarding whitespace characters in said source-code of said received e-mail message;
- counting the number of non-whitespace characters in said source-code of said received e-mail message.

In yet another example, the at least one processor may further be configured for:
- condensing said visual representation of said source-code of said received e-mail message.

In an example, the condensing may comprise at least one of:
- grabbing a number of lines together to form a plurality of blocks;
- determining an average number of non-whitespace characters in each of said plurality of blocks.
characters may further be condensed by applying a ratio, i.e. a horizontal ratio and a vertical ratio.

According to the invention, the at least one processor is further configured to
- classify said received e-mail as a spam e-mail triggered by said determining that said received e-mail message is similar to another e-mail message.

In an example, the e-mail processing device may be any of:
- an incoming e-mail server;
- A User Equipment.

According to the invention there is equally provided a non-transitory computer-readable storage medium as claimed in claim 14.

It is noted that the advantages and definitions as disclosed with respect to the examples of the first and second aspect of the invention also correspond to the examples of the third aspect of the invention, being the non-transitory computer readable processing device.

Any type of computer readable storage medium may be utilized. The computer readable storage medium may be, for example, but not limited to, an electronic, magnetic, optical, electromagnetic, infrared, or semiconductor system, apparatus, or device, or any suitable combination of the foregoing. More specific examples of the computer readable storage medium would include the following: an electrical connection having one or more wires, a portable computer diskette, a hard disk, a random access memory, RAM, a read-only memory, ROM, an erasable programmable read-only memory, a portable compact disc read-only memory, an optical storage device, a magnetic storage device, or any suitable combination of the foregoing.

The above-mentioned and other features and advantages of the disclosure will be best understood from the following description referring to the attached drawings. In the drawings, like reference numerals denote identical parts or parts performing an identical or comparable function or operation.

### Brief description of the drawings

Fig. 1 discloses a flowchart of an example of a method in accordance with the present disclosure;
Fig. 2 discloses three examples of how to compute a content identification code from a received e-mail message.
Fig. 3 discloses an e-mail processing device for recognizing similarity of e-mail messages.

### Detailed description

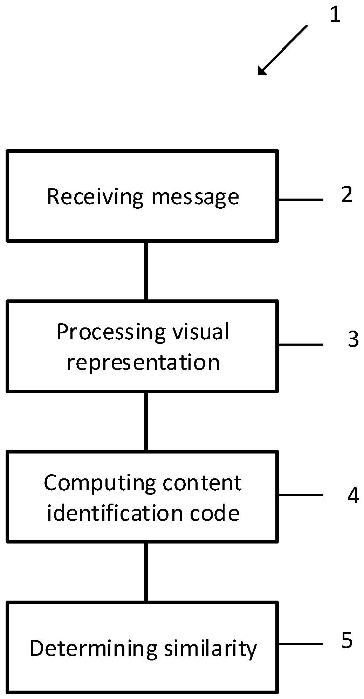

Figure 1 discloses a flowchart 1 of an example of a method in accordance with the present disclosure.

The present disclosure is directed to the concept of finding a similarity match between e-mail messages. One of the issues with detecting these e-mail messages is that those e-mail messages are, often, not completely the same. The e-mail messages are construed in such a way that they appear as if they are completely the same while, in reality, small differences in these messages may exist. These small differences are the main reason that a one to one comparison of these e-mail messages fail. That is, an algorithm that operates on the working principle of a one to one comparison of e-mail messages will not find any match as the e-mail messages are slightly different.

It was the insight of the inventors that a different approach is needed to match e-mail messages to determine whether they are the same. The approach is based on how a human would perceive the e-mail messages. If two e-mail messages are perceived as if they are the same, then, according to the present disclosure, they are to be classified as the same. Even if small differences between the e-mail messages actually exist.

The present disclosure is directed to a method for quantifying the perception of an e-mail message for a particular receiver.

In a first step 2, a particular e-mail message is received by an e-mail processing device. The e-mail message may be based on a plain text format, or may be based on a HTML format, or a combination of both.

The third and fourth step, as indicated with reference numerals 3 and 4, present the quantification of a visual representation of the received e-mail. This may be explained as follows.

The visual representation of the received e-mail message is processed 3 thereby resulting in a processed visual representation in which visual characteristics of the visual representation are highlighted.

The above step may be realized in a variety of manners, some of which are explained here below as examples.

The visual representation of the received e-mail message may, for example, be the source code of the e-mail. Here, a viewport may be set to what a typical human viewer would see when looking at the e-mail message. The size of the viewport may, for example, be 1024 x 800 pixels. Another option is that the size of the viewport is configured, automatically, to the resolution of the screen at which the e-mail message is to be viewed.

Using the viewport, an image may then be created. The image is, in this example, the visual representation of the received e-mail of, for example 1024 x 800 pixels. The image may be created with an automatic sniping tool, a screenshot maker, or anything alike. The image may thus cover the e-mail message as how a person would look at it.

The image is then, subsequently, processed such that visual characteristics of the visual representation are highlighted. For example, the image may be divided into a grid having a plurality of cells. The size of the grid may be 16x16 cells, 32x32 cells, 64x64 cells, or anything alike.

The content of each cell may be replaced by the average colour of that particular cell. The result is that the cells are made more vague, abstract, or fuzzy. This is, for example, comparable to the situation in which a particular person squeezes its eyes when viewing the particular image.

In a next step, a content identification code is computed 4 from the processed visual representation. The content identification code is thus a quantification for the processed visual representation of the e-mail message. It is thus a measure for how a human would visually perceive the received e-mail message.

The process of creating a content identification code may, for example, be an algorithm that creates a unique code based on a plurality of average colour codes for each of the cells in the grid. Another option is that the content identification code is related to a hash code.

A hash function is any function that could be used to map data of arbitrary size to data of a fixed size. The values returned by a hash function are called hash values, hash codes, digests, or simply hashes.

In a final step 5, the content identification code is compared with a plurality of content identification codes in a database. A match is then found when the computed content identification code matches a content identification code in the database, thereby concluding that the received e-mail message is similar to another e-mail message.

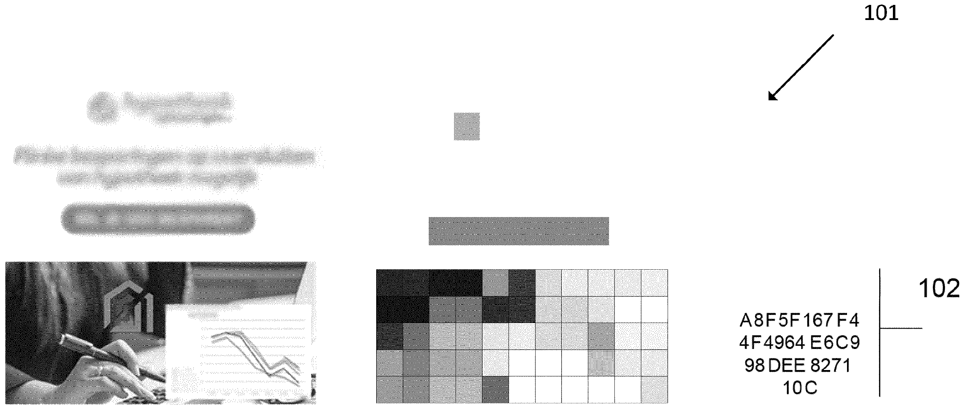

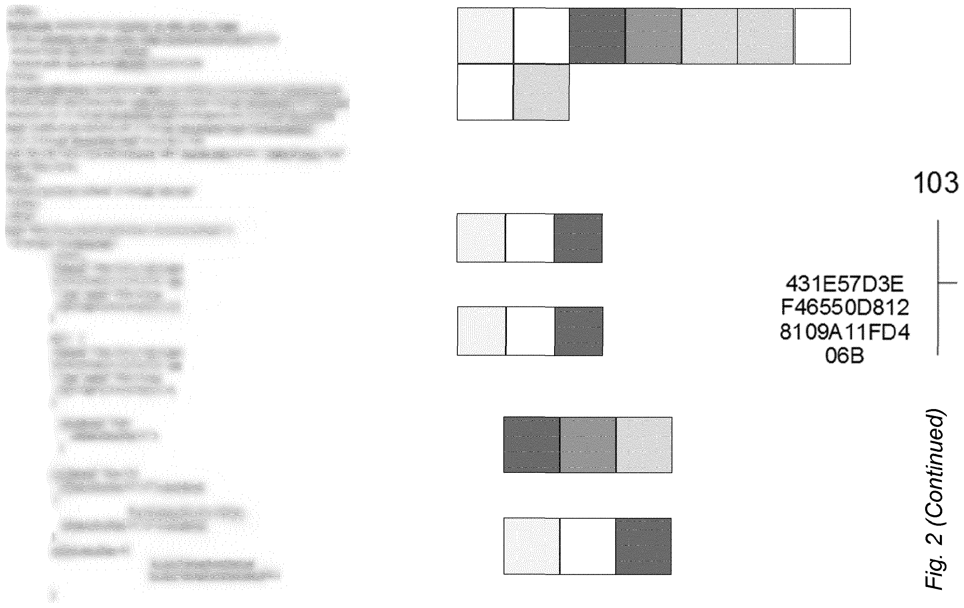

Figure 2 discloses three examples 101 of how to compute a content identification code from a received e-mail message. These three examples are indicated with reference numerals 102, 103 and 104. Each of these three examples are elucidated in more detail here below.

The first example 102 is related to the visual representation of the rendered e-mail itself. At the left side thereof, there is shown the received e-mail in its rendered form. In this particular case, a screenshot is made of a particular window of the received e-mail. The screenshot may thus resemble an impression to the user when the user gets a first glance of the received e-mail.

The screenshot, i.e. the visual representation of the received e-mail, is then processed thereby resulting in a processed visual representation in which visual characteristics of the visual representation are highlighted.

In this particular example 102, it is chosen to make the visual representation fuzzy. Making a visual representation fuzzy may entail applying a low pass filter. A low-pass filter, also called a "blurring" or "smoothing" filter, may average out rapid changes in intensity. A low-pass filter may calculate the average of a pixel and all of its eight immediate neighbour pixels. The result may then replace the original value of the pixel. The process may be repeated for every pixel in the image.

The processed visual representation may then look blurry or fuzzy. The processed visual representation resembles an image as how it is perceived by a user when he/she quickly glances over the original image. That particular processed visual representation form the basis for the comparison process of the presented method.

From the processed visual representation, a content identification code is computed. Preferably, the content identification code is a hash code. In figure 2, the hash code is resembled by a string of characters.

A hash function may take a group of characters / data, for example pixel values average colours, line-lengths, etc., and may map it to a value of a certain length, which is called a hash value or hash. The hash value is representative of the original input, but is normally smaller than the original. Hashing may be done for indexing and locating items in the database, because it is quicker to find the shorter hash value than the longer string.

As such, the computed hash code is used for the comparison process. In the comparison process, it is determined that the received e-mail message is similar to another e-mail message by finding a match between the computed content identification code, i.e. the hash code, and a plurality of content identification codes, i.e. hash codes, in the database.

The second example 103 relates to the visual representation of a source-code of the received e-mail message. At the left side, there is shown the source-code of the received e-mail message. The source code of the e-mail message may, for example, be based on an HTML code. For the present disclosure, the actual content may not be relevant for the method of recognizing similarity of e-mail message, but the visual aspects of the source code may be relevant.

That is, the visual representation of the source code of the received e-mail message may be directed to the blocks, lines, paragraphs, white lines, enters, etc., of how the source code is construed.

The visual representation of the received e-mail message, i.e. the source code of the e-mail message as shown, is then processed similarly to the example as indicated with reference numeral 102.

For example, the visual representation may be divided into a grid having a plurality of cells, and an average colour may be computed for each of those cells. This may resemble a low pass filter that is applied to the initial visual representation. The computed has code is then based on each of the average colours in each of the cells, respectively.

The third example is indicated with reference numeral 104. Again, at the left side, there is shown a visual representation of the source code of the received e-mail message. The visual representation is, subsequently, processed into a processed visual representation. This may entail several steps.

In a first step, transfer-encoded parts of the source-code of the received e-mail message may be decoded with a text content-type to view a textual representation of the source-code of the received e-mail message. Then, the header of the received e-mail message may be discarded. Finally, lines of the source-code of the received e-mail message which fall outside the visual representation may be wrapped.

In the present example, a contour of the source code of the received e-mail message is determined, wherein the contour is specific for the received e-mail. The contour is then processed into a hash code.

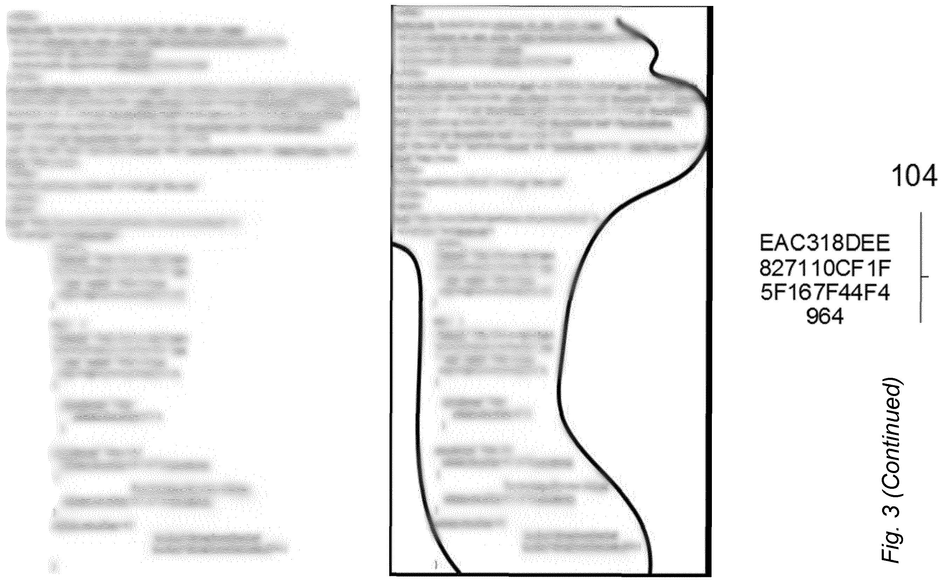

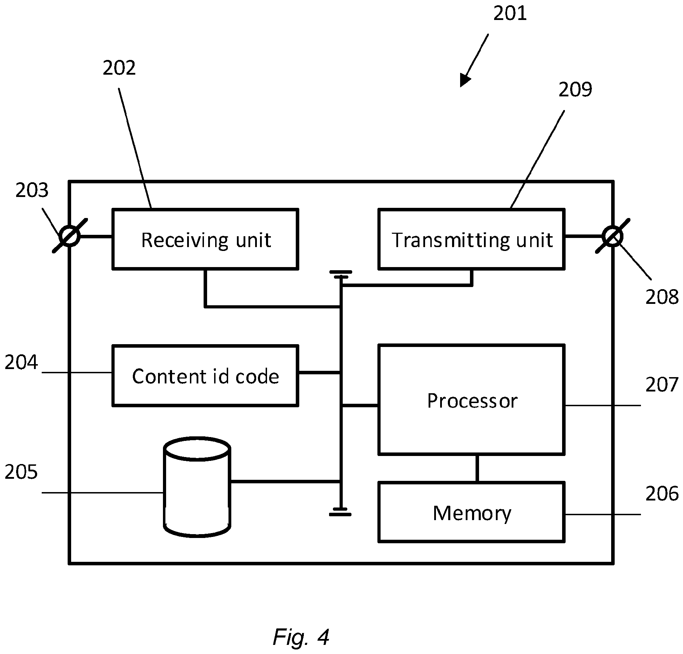

Figure 3 discloses an e-mail processing device for recognizing similarity of e-mail messages.

The e-mail processing device 209 comprises:
- a receiving unit 202;
- and at least one processor 207, coupled to a memory 206, configured to:
   use said receiving unit for receiving an e-mail message;
   process a visual representation of said received e-mail message thereby resulting in a processed visual representation in which visual characteristics of said visual representation are highlighted;
   compute from said processed visual representation, a content identification code 204, wherein said content identification code is a measure for how a human would visually perceive said received e-mail message;
   determine that said received e-mail message is similar to another e-mail message by finding a match between said computed content identification code and a plurality of content identification codes in a database 205.

The e-mail processing device further comprises a transmitting unit 209 for transmitting any e-mail messages to recipients. An receiving terminal 203 is provided for receiving incoming e-mail messages and a transmitting terminal 208 is provided for transmitting outgoing e-mail messages.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope thereof.

## Claims

1. A method (1) of recognizing spam e-mail messages, by an e-mail processing device, wherein said method comprises the steps of:
- receiving (2) an e-mail message; **characterized by**
- processing (3) a visual representation of a source code of said received e-mail message thereby resulting in a processed visual representation of said source code of said e-mail message in which visual characteristics of said visual representation are highlighted;
- computing (4) from said processed visual representation of said source code of said e-mail message, a content identification code, wherein said content identification code is a measure for how a human would visually perceive said visual representation of said source code of said received e-mail message;
- determining (5) that said received e-mail message is similar to another e-mail message by finding a match between said computed content identification code and a plurality of content identification codes in a database, and
- classifying said received e-mail as a spam e-mail triggered by said step of determining that said received e-mail message is similar to another e-mail message.

2. A method in accordance with claim 1, wherein said step of processing further comprises:
- dividing said visual representation into a grid having a plurality of cells;
- computing an average colour for each cell of said plurality of cells in said grid;
and wherein said step of computing uses said computed average colour for each cell as input for computing said content identification code.

3. A method in accordance with claim 1, and wherein said step of processing said visual representation further comprises at least one of:
- decoding transfer-encoded parts of said source-code of said received e-mail message with a text content-type to view a textual representation of said source-code of said received e-mail message;
- discarding a header of said received e-mail message;
- wrapping lines of said source-code of said received e-mail message which fall outside said visual representation.

4. A method in accordance with claim 3, wherein said step of processing further comprises:
- discarding whitespace characters in said source-code of said received e-mail message;
- counting the number of non-whitespace characters in said source-code of said received e-mail message.

5. A method in accordance with claim 4, wherein said step of processing further comprises:
- condensing said visual representation of said source-code of said received e-mail message.

6. A method in accordance with claim 5, wherein said step of condensing comprises at least one of:
- grabbing a number of lines together to form a plurality of blocks;
- determining, per block of said plurality of blocks, an average number of non-whitespace characters in each line.

7. An e-mail processing device (201) for recognizing spam e-mail messages, wherein said e-mail processing device comprises:
- a receiving unit (202);
- and at least one processor (207) configured to:
use said receiving unit for receiving an e-mail message;
process a visual representation of a source-code of said received e-mail message thereby resulting in a processed visual representation of said source code of said e-mail message in which visual characteristics of said visual representation are highlighted;
compute from said processed visual representation of said source code of said e-mail message, a content identification code (204), wherein said content identification code is a measure for how a human would visually perceive the visual representation of the source-code of said received e-mail message;
determine that said received e-mail message is similar to another e-mail message by finding a match between said computed content identification code and a plurality of content identification codes in a database (205),
classify said received e-mail as a spam e-mail triggered by said determining that said received e-mail message is similar to another e-mail message.

8. An e-mail processing device in accordance with claim 7, wherein said at least one processor is further configured for any of:
- dividing said visual representation into a grid having a plurality of cells;
- computing an average colour for each cell of said plurality of cells in said grid;
and wherein said computing uses said computed average colour for each cell as input for computing said has hash code.

9. An e-mail processing device in accordance with claim 8, wherein said at least one processor is arranged for processing said visual representation of said source-code of said received e-mail message, and wherein said at least one processor is further arranged for processing said visual representation by:
- decoding transfer-encoded parts of said source-code of said received e-mail message with a text content-type to view a textual representation of said source-code of said received e-mail message;
- discarding a header of said received e-mail message;
- wrapping lines of said source-code of said received e-mail message which fall outside said visual representation.

10. An e-mail processing device in accordance with claim 9, wherein said at least one processor is further arranged for:
- discarding whitespace characters in said source-code of said received e-mail message;
- counting the number of non-whitespace characters in said source-code of said received e-mail message.

11. An e-mail processing device in accordance with claim 10, wherein said at least one processor is further configured for:
- condensing said visual representation of said source-code of said received e-mail message.

12. An e-mail processing device in accordance with claim 11, wherein said condensing comprises at least one of:
- grabbing a number of lines together to form a plurality of blocks;
- determining, per block of said plurality of blocks, an average number of non-whitespace characters in each line.

13. An e-mail processing device in accordance with any of the claims 7 - 12, wherein said e-mail processing device is any of:
- an incoming e-mail server;
- A User Equipment.

14. A non-transitory computer-readable storage medium, comprising instructions which, when executed on an e-mail processing device, cause said e-mail processing device to carry out the method in accordance with any of the claims 1-6.

## Patentansprüche

1. Verfahren (1) zur Erkennung von Spam-E-Mail-Nachrichten durch eine E-Mail-Verarbeitungsvorrichtung, wobei das Verfahren die Schritte umfasst:
- Empfangen (2) einer E-Mail-Nachricht; **gekennzeichnet durch**
- Verarbeiten (3) einer visuellen Darstellung eines Quellcodes der empfangenen E-Mail-Nachricht, was zu einer verarbeiteten visuellen Darstellung des Quellcodes der E-Mail-Nachricht führt, in der visuelle Merkmale der visuellen Darstellung hervorgehoben sind;
- Berechnen (4), aus der verarbeiteten visuellen Darstellung des Quellcodes der E-Mail-Nachricht, eines Inhaltsidentifikationscodes, wobei der Inhaltsidentifikationscode ein Maß dafür ist, wie ein Mensch die visuelle Darstellung des Quellcodes der empfangenen E-Mail-Nachricht visuell wahrnehmen würde;
- Bestimmen (5), dass die empfangene E-Mail-Nachricht einer anderen E-Mail-Nachricht ähnlich ist, indem eine Übereinstimmung zwischen dem berechneten Inhaltsidentifikationscode und mehreren Inhaltsidentifikationscodes in einer Datenbank gefunden wird, und
- Klassifizieren der empfangenen E-Mail als Spam-E-Mail, ausgelöst durch den Schritt des Bestimmens, dass die empfangene E-Mail-Nachricht einer anderen E-Mail-Nachricht ähnlich ist.

2. Verfahren gemäß Anspruch 1, wobei der Schritt des Verarbeitens ferner umfasst:
- Unterteilen der visuellen Darstellung in ein Gitter mit mehreren Zellen;
- Berechnen einer durchschnittlichen Farbe für jede Zelle der mehreren Zellen in dem Gitter;
und wobei der Schritt des Berechnens die berechnete Durchschnittsfarbe für jede Zelle als Eingabe für das Berechnen des Inhaltsidentifikationscodes verwendet.

3. Verfahren gemäß Anspruch 1, und wobei der Schritt des Verarbeitens der visuellen Darstellung weiterhin wenigstens eines der folgenden umfasst:
- Decodieren von übertragungscodierten Teilen des Quellcodes der empfangenen E-Mail-Nachricht mit einem Textinhaltstyp, um eine Textdarstellung des Quellcodes der empfangenen E-Mail-Nachricht anzuzeigen;
- Verwerfen eines Kopfteils der empfangenen E-Mail-Nachricht;
- Umbrechen von Zeilen des Quellcodes der empfangenen E-Mail-Nachricht, die aus der visuellen Darstellung herausfallen.

4. Verfahren gemäß Anspruch 3, wobei der Schritt des Verarbeitens ferner umfasst:
- Verwerfen von Leerzeichen im Quellcode der empfangenen E-Mail-Nachricht;
- Zählen der Anzahl der Zeichen ohne Leerzeichen im Quellcode der empfangenen E-Mail-Nachricht.

5. Verfahren gemäß Anspruch 4, wobei der Schritt des Verarbeitens ferner umfasst:
- Verdichten der visuellen Darstellung des Quellcodes der empfangenen E-Mail-Nachricht.

6. Verfahren gemäß Anspruch 5, wobei der Schritt des Verdichtens wenigstens eines der folgenden umfasst:
- Zusammenfassen einer Anzahl von Zeilen, um mehrere Blöcke zu bilden;
- Bestimmen, pro Block der mehreren Blöcke, einer durchschnittlichen Anzahl von Nicht-Leerzeichen in jeder Zeile.

7. E-Mail-Verarbeitungsvorrichtung (201) zur Erkennung von Spam-E-Mail-Nachrichten, wobei die E-Mail-Verarbeitungsvorrichtung umfasst:
- eine Empfangseinheit (202);
- und wenigstens einen Prozessor (207), der ausgelegt ist zum:
Verwenden der Empfangseinheit zum Empfangen einer E-Mail-Nachricht;
Verarbeiten einer visuellen Darstellung eines Quellcodes der empfangenen E-Mail-Nachricht, was zu einer verarbeiteten visuellen Darstellung des Quellcodes der E-Mail-Nachricht führt, in der visuelle Merkmale der visuellen Darstellung hervorgehoben sind;
Berechnen, aus der verarbeiteten visuellen Darstellung des Quellcodes der E-Mail-Nachricht, eines Inhaltsidentifikationscodes (204), wobei der Inhaltsidentifikationscode ein Maß dafür ist, wie ein Mensch die visuelle Darstellung des Quellcodes der empfangenen E-Mail-Nachricht visuell wahrnehmen würde;
Bestimmen, dass die empfangene E-Mail-Nachricht einer anderen E-Mail-Nachricht ähnlich ist, indem eine Übereinstimmung zwischen dem berechneten Inhaltsidentifikationscode und mehreren Inhaltsidentifikationscodes in einer Datenbank gefunden wird (205),
Klassifizieren der empfangenen E-Mail als Spam-E-Mail, ausgelöst durch das Bestimmen, dass die empfangene E-Mail-Nachricht einer anderen E-Mail-Nachricht ähnlich ist.

8. E-Mail-Verarbeitungsvorrichtung gemäß Anspruch 7, wobei der wenigstens eine Prozessor ferner ausgelegt ist zu einem der folgenden:
- Unterteilen der visuellen Darstellung in ein Gitter mit mehreren Zellen;
- Berechnen einer durchschnittlichen Farbe für jede Zelle der mehreren Zellen in dem Gitter;
und wobei das Berechnen die berechnete Durchschnittsfarbe für jede Zelle als Eingabe für das Berechnen des Hashcodes verwendet.

9. E-Mail-Verarbeitungsvorrichtung gemäß Anspruch 8, wobei der wenigstens eine Prozessor ausgelegt ist zum Verarbeiten der visuellen Darstellung des Quellcodes der empfangenen E-Mail-Nachricht und wobei der wenigstens eine Prozessor ferner ausgelegt ist zum Verarbeiten der visuellen Darstellung durch:
- Decodieren von übertragungscodierten Teilen des Quellcodes der empfangenen E-Mail-Nachricht mit einem Textinhaltstyp, um eine Textdarstellung des Quellcodes der empfangenen E-Mail-Nachricht anzuzeigen;
- Verwerfen eines Kopfteils der empfangenen E-Mail-Nachricht;
- Umbrechen von Zeilen des Quellcodes der empfangenen E-Mail-Nachricht, die aus der visuellen Darstellung herausfallen.

10. E-Mail-Verarbeitungsvorrichtung gemäß Anspruch 9, wobei der wenigstens eine Prozessor ferner ausgelegt ist zum:
- Verwerfen von Leerzeichen im Quellcode der empfangenen E-Mail-Nachricht;
- Zählen der Anzahl der Zeichen ohne Leerzeichen im Quellcode der empfangenen E-Mail-Nachricht.

11. E-Mail-Verarbeitungsvorrichtung gemäß Anspruch 10, wobei der wenigstens eine Prozessor ferner ausgelegt ist zum:
- Verdichten der visuellen Darstellung des Quellcodes der empfangenen E-Mail-Nachricht.

12. E-Mail-Verarbeitungsvorrichtung gemäß Anspruch 11, wobei das Verdichten wenigstens eines der folgenden umfasst:
- Zusammenfassen einer Anzahl von Zeilen, um mehrere Blöcke zu bilden;
- Bestimmen, pro Block der mehreren Blöcke, einer durchschnittlichen Anzahl von Nicht-Leerzeichen in jeder Zeile.

13. E-Mail-Verarbeitungsvorrichtung gemäß einem der Ansprüche 7-12, wobei die E-Mail-Verarbeitungsvorrichtung eines der folgenden ist:
- ein E-Mail-Eingangsserver;
- eine Benutzereinrichtung (User Equipment).

14. Nichttransitorisches, computerlesbares Speichermedium, das Anweisungen umfasst, die bei Ausführung auf einer E-Mail-Verarbeitungsvorrichtung bewirken, dass die E-Mail-Verarbeitungsvorrichtung das Verfahren gemäß einem der Ansprüche 1-6 ausführt.

## Revendications

1. Procédé (1) de reconnaissance de messages de courrier électronique indésirable, par un dispositif de traitement de courrier électronique, dans lequel ledit procédé comprend les étapes suivantes :
- la réception (2) d'un message de courrier électronique ; **caractérisé par**
- le traitement (3) d'une représentation visuelle d'un code source dudit message de courrier électronique reçu, d'où l'obtention d'une représentation visuelle traitée dudit code source dudit message de courrier électronique où des caractéristiques visuelles de ladite représentation visuelle sont mises en évidence ;
- le calcul (4), à partir de ladite représentation visuelle traitée dudit code source dudit message de courrier électronique, d'un code d'identification de contenu, dans lequel ledit code d'identification de contenu est une mesure de la façon dont un être humain devrait percevoir visuellement ladite représentation visuelle dudit code source dudit message de courrier électronique reçu ;
- la détermination (5) du fait que ledit message de courrier électronique reçu est similaire à un autre message de courrier électronique en recherchant une correspondance entre ledit code d'identification de contenu calculé et une pluralité de codes d'identification de contenu dans une base de données ; et
- la classification dudit courrier électronique reçu en tant que courrier électronique indésirable, la classification étant déclenchée par ladite étape de détermination du fait que ledit message de courrier électronique reçu est similaire à un autre message de courrier électronique.

2. Procédé selon la revendication 1, dans lequel ladite étape de traitement comprend en outre :
- la division de ladite représentation visuelle selon un réseau comportant une pluralité de cellules ; et
- le calcul d'une couleur moyenne pour chaque cellule de ladite pluralité de cellules dans ledit réseau ;
dans lequel ladite étape de calcul utilise ladite couleur moyenne calculée pour chaque cellule en tant qu'entrée pour calculer ledit code d'identification de contenu.

3. Procédé selon la revendication 1, et dans lequel ladite étape de traitement de ladite représentation visuelle comprend en outre au moins une sous-étape parmi :
- le décodage de parties codées par transfert dudit code source dudit message de courrier électronique reçu avec un type de contenu de format texte pour visualiser une représentation textuelle dudit code source dudit message de courrier électronique reçu ;
- la mise à l'écart d'un en-tête dudit message de courrier électronique reçu ; et
- le formatage de lignes dudit code source dudit message de courrier électronique reçu qui tombent à l'extérieur de ladite représentation visuelle.

4. Procédé selon la revendication 3, dans lequel ladite étape de traitement comprend en outre :
- la mise à l'écart de caractères d'espacement dans ledit code source dudit message de courrier électronique reçu ; et
- le comptage du nombre de caractères de non espacement dans ledit code source dudit message de courrier électronique reçu.

5. Procédé selon la revendication 4, dans lequel ladite étape de traitement comprend en outre :
- la condensation de ladite représentation visuelle dudit code source dudit message de courrier électronique reçu.

6. Procédé selon la revendication 5, dans lequel ladite étape de condensation comprend au moins une sous-étape parmi :
- la considération ensemble d'un nombre de lignes pour former une pluralité de blocs ; et
- la détermination, par bloc de ladite pluralité de blocs, d'un nombre moyen de caractères de non espacement dans chaque ligne.

7. Dispositif de traitement de courrier électronique (201) pour reconnaître des messages de courrier électronique indésirable, dans lequel ledit dispositif de traitement de courrier électronique comprend :
- une unité de réception (202) ; et
- au moins un processeur (207) configuré pour :
utiliser ladite unité de réception pour recevoir un message de courrier électronique ;
traiter une représentation visuelle d'un code source dudit message de courrier électronique reçu, d'où ainsi l'obtention d'une représentation visuelle traitée dudit code source dudit message de courrier électronique où des caractéristiques visuelles de ladite représentation visuelle sont mises en évidence ;
- calculer, à partir de ladite représentation visuelle traitée dudit code source dudit message de courrier électronique, un code d'identification de contenu (204), dans lequel ledit code d'identification de contenu est une mesure de la façon dont un être humain devrait percevoir visuellement la représentation visuelle du code source dudit message de courrier électronique reçu ;
- déterminer que ledit message de courrier électronique reçu est similaire à un autre message de courrier électronique en recherchant une correspondance entre ledit code d'identification de contenu calculé et une pluralité de codes d'identification de contenu dans une base de données (205) ; et
- classifier ledit courrier électronique reçu en tant que courrier électronique indésirable, la classification étant déclenchée par ladite détermination du fait que ledit message de courrier électronique reçu est similaire à un autre message de courrier électronique.

8. Dispositif de traitement de courrier électronique selon la revendication 7, dans lequel ledit au moins un processeur est en outre configuré pour l'une quelconque des étapes suivantes :
- la division de ladite représentation visuelle selon un réseau comportant une pluralité de cellules ;
- le calcul d'une couleur moyenne pour chaque cellule de ladite pluralité de cellules dans ledit réseau ; et
dans lequel ledit calcul utilise ladite couleur moyenne calculée pour chaque cellule en tant qu'entrée pour calculer ledit code d'identification de contenu/d'empreinte.

9. Dispositif de traitement de courrier électronique selon la revendication 8, dans lequel ledit au moins un processeur est agencé pour traiter ladite représentation visuelle dudit code source dudit message de courrier électronique reçu, et dans lequel ledit au moins un processeur est en outre agencé pour traiter ladite représentation visuelle en :
- décodant des parties codées par transfert dudit code source dudit message de courrier électronique reçu avec un type de contenu de format texte pour visualiser une représentation textuelle dudit code source dudit message de courrier électronique reçu ; en
- mettant à l'écart un en-tête dudit message de courrier électronique reçu ; et en
- formatant des lignes dudit code source dudit message de courrier électronique reçu qui tombent à l'extérieur de ladite représentation visuelle.

10. Dispositif de traitement de courrier électronique selon la revendication 9, dans lequel ledit au moins un processeur est en outre agencé pour :
- mettre à l'écart des caractères d'espacement dans ledit code source dudit message de courrier électronique reçu ; et
- compter le nombre de caractères de non espacement dans ledit code source dudit message de courrier électronique reçu.

11. Dispositif de traitement de courrier électronique selon la revendication 10, dans lequel ledit au moins un processeur est en outre configuré pour :
- condenser ladite représentation visuelle dudit code source dudit message de courrier électronique reçu.

12. Dispositif de traitement de courrier électronique selon la revendication 11, dans lequel ladite condensation comprend au moins une sous-étape parmi :
- la considération ensemble d'un nombre de lignes pour former une pluralité de blocs ; et
- la détermination, par bloc de ladite pluralité de blocs, d'un nombre moyen de caractères de non espacement dans chaque ligne.

13. Dispositif de traitement de courrier électronique selon l'une quelconque des revendications 7 à 12, dans lequel ledit dispositif de traitement de courrier électronique est l'un quelconque parmi :
- un serveur de courrier électronique entrant ;
- un équipement utilisateur.

14. Support de stockage lisible par ordinateur non transitoire comprenant des instructions qui, lorsqu'elles sont exécutées sur un dispositif de traitement de courrier électronique, forcent ledit dispositif de traitement de courrier électronique à mettre en œuvre le procédé selon l'une quelconque des revendications 1 à 6.
